# EUROPÄISCHE PATENTSCHRIFT

(11) **EP 1 939 054 B1**
(45) Veröffentlichungstag und Bekanntmachung des Hinweises auf die Patenterteilung: **15.02.2012**
(21) Anmeldenummer: 07119562.2
(22) Anmeldetag: 30.10.2007
(51) Int. Cl.: B60S 1/04, B60S 1/24, B60S 1/34

(54) **Scheibenwischvorrichtung, insbesondere in einem Kraftfahrzeug**
Windscreen wiper device, in particular for a motor vehicle
Dispositif d'essuie-glace, en particulier dans un véhicule automobile

(30) Priorität: 29.12.2006 DE 102006062003
(43) Veröffentlichungstag der Anmeldung: 02.07.2008
(73) Patentinhaber: Robert Bosch GmbH, 70442 Stuttgart (DE)
(72) Erfinder: Mayer, Stephan, 77855 Achern (DE); Schabanel, Francois, 94100 Saint Maur des Fossés (FR)

(56) Entgegenhaltungen:
- DE-A1- 19 801 296
- DE-A1-102004 005 067
- FR-A1- 2 907 733

## Beschreibung

Die Erfindung bezieht sich auf eine Scheibenwischvorrichtung, insbesondere in einem Kraftfahrzeug, nach dem Oberbegriff des Anspruches 1.

### Stand der Technik

Aus der DE 10 2004 005 067 A1 ist eine Scheibenwischvorrichtung für ein Kraftfahrzeug bekannt, deren Wischerarm auf einer rotierend gelagerten Wischerwelle gelagert ist, welche von einem elektrischen Antriebsmotor reversierend angetrieben wird. Hierzu ist der Anker des Antriebsmotors über ein Getriebe mit einer Abtriebswelle gekoppelt, die über ein Wischergestänge mit der Wischerwelle verbunden ist. Die Bewegungsübertragung erfolgt somit vom Anker des elektrischen Antriebsmotors über das Getriebe, die Abtriebswelle und das Wischergestänge auf die Wischerwelle.

Die DE 198 01 296 A1 offenbart eine Scheibenwischvorrichtung mit einer Wischerwelle, die über eine Übertragungseinrichtung, welche ein Getriebe, eine Kurbelstange und ein Kurbelgetriebe umfasst, von einem Antriebsmotor angetrieben wird. Die Wischerwelle ist gekrümmt ausgeführt und weist einen ersten geradlinigen Abschnitt, der in einer gestellfesten Lagerschale aufgenommen ist, sowie einen zweiten, geradlinigen Abschnitt auf, welcher Träger eines Wischerarms ist. Der erste und der zweite Wischerarmabschnitt nehmen zueinander einen Winkel ein. Der Übergang zwischen dem ersten und dem zweiten Wischerarmabschnitt ist entweder als Knick oder gerundet ausgeführt. Bei einer Rotation der Wischerwelle um die Längsachse des in der gestellfesten Lagerschale aufgenommenen Abschnittes führt der hierzu gekrümmt angeordnete zweite Abschnitt, der Träger des Wischerarms ist, eine Taumelbewegung aus.

Die nachveröffentlichte FR 2 907 733 A1 offenbart eine Scheibenwischvorrichtung mit einer Hauptwischerwelle, die um eine Rotationsachse drehend angetrieben wird. Auf der Hauptwischerwelle sitzt ein Schwenkmechanismus, der um eine Schwenkachse verschwenkbar ist und eine Zusatzwischerwelle trägt, die im Bereich ihrer freien Stirnseite mit einem Wischarm verbunden ist. Im Bereich der gegenüberliegenden Stirnseite weist die Zusatzwischerwelle eine Steuerkugel auf, die in einer Nockenkurve geführt ist. Bei einer Rotation der Hauptwischerwelle um die Rotationsachse führt die Zusatzwischerwelle eine kinematisch zwangsgesteuerte Bewegung aus, bei der sich der Winkel der Achse der Zusatzwischerwelle gegenüber der Rotationsachse der Hauptwischerwelle ändert.

Allgemein ist bei Scheibenwischvorrichtungen die Krümmung der zu reinigenden Scheibe zu berücksichtigen. Insbesondere bei Frontscheiben ist die Scheibenkrümmung in den den A-Säulen benachbarten Bereichen verhältnismäßig groß, was zu einem schlechteren Wischergebnis führen kann, da das Wischblatt nicht mehr plan auf der Scheibe aufliegt und der Anpressdruck über die Länge des Wischblattes nicht mehr gleichmäßig verteilt ist. Um Sichtbeeinträchtigungen zu vermeiden, ist man jedoch bestrebt, ein möglichst großes Sichtfeld von der Scheibenwischvorrichtung effektiv reinigen zu lassen, das auch Bereiche stärkerer Scheibenkrümmungen einschließen kann.

### Offenbarung der Erfindung

Der Erfindung liegt die Aufgabe zugrunde, eine Scheibenwischvorrichtung anzugeben, die sich durch ein gutes Reinigungsergebnis auszeichnet. Es soll insbesondere möglich sein, auch gekrümmte Scheiben in den Bereichen erhöhter Krümmung effektiv wischen zu können.

Diese Aufgabe wird erfindungsgemäß mit den Merkmalen des Anspruches 1 gelöst. Die Unteransprüche geben zweckmäßige Weiterbildungen an.

Die erfindungsgemäße Scheibenwischvorrichtung, die insbesondere in einem Kraftfahrzeug eingesetzt wird, weist einen elektrischen Antriebsmotor auf, der über eine Übertragungseinrichtung mit einer Wischerwelle bewegungsgekoppelt ist, an der ein Wischerarm befestigt ist. Die Wischerwelle ist um eine Rotationsachse rotierend gelagert, wobei diese Rotationsbewegung das Wischfeld des Wischerarms abdeckt. Zusätzlich zu dieser rotierenden Lagerung ist die Wischerwelle um eine Schwenkachse verschwenkbar gelagert, wobei Schwenkachse und Rotationsachse der Wischerwelle zueinander in einem Winkel stehen. Die Wischerwelle wird von einem Aktuator um die Schwenkachse beaufschlagt.

In dieser Ausführung weist die Wischerwelle zusätzlich zur Rotationsbewegung eine weitere Bewegungsmöglichkeit auf, nämlich die Schwenkbewegung um die Schwenkachse, die winklig zur Rotationsachse steht. Dieser zusätzliche Freiheitsgrad der Wischerwelle und des Wischerarms wird über einen Aktuator gebunden, der auf die Wischerwelle bzw. den Wischerarm einwirkt. Der Aktuator führt eine Stellbewegung aus, die zu einem Verschwenken der Wischerwelle um die Schwenkachse führt. Die Schwenkbewegung wird insbesondere gleichzeitig zur Rotationsbewegung der Wischerwelle und des Wischerarms ausgeübt, so dass Wischerwelle und Wischerarm insgesamt eine dreidimensionale Rotations- und Schwenkbewegung ausführen. Damit ist es möglich, den Wischerarm der Krümmung der zu reinigenden Scheibe folgen zu lassen und im Vergleich zu Ausführungen aus dem Stand der Technik den Wischerarm mit gleichmäßigerem Anpressdruck über die Scheibe und plan aufliegend auf der Scheibe zu führen. Im Ergebnis wird eine bessere Reinigung der Scheibe auch in Abschnitten stärkerer Krümmung erreicht.

Die Schwenkachse steht vorteilhaft zumindest annähernd senkrecht zur Rotationsachse der Wischerwelle, wobei grundsätzlich auch hiervon abweichende Winkelwerte in Betracht kommen. Außerdem ist sowohl ein Schneiden der Achsen als auch ein Kreuzen mit einem Abstand der Achsen zueinander möglich.

Gemäß einer bevorzugten Ausführung bilden der Antriebsmotor, die Übertragungseinrichtung und die Wischerwelle einschließlich Wischerarm ein zusammenhängendes Modul, das um die Schwenkachse verschwenkbar gelagert ist. Bei einer Anwendung der Scheibenwischvorrichtung in Kraftfahrzeugen erfolgt die Schwenkbewegung gegenüber der Fahrzeugkarosserie, die bei modularer Ausführung von Antriebsmotor, Übertragungseinrichtung und Wischerwelle bzw. Wischerarm von diesen Bauteilen gemeinsam ausgeübt wird. Außerdem kann es zweckmäßig sein, einen Trag- bzw. Hilfsrahmen vorzusehen, der Bestandteil der Scheibenwischvorrichtung ist und gegenüber dem die Wischerwelle einschließlich Wischerarm bzw. das gesamte Modul schwenkbar gelagert ist. Die Ausführung mit dem Tragrahmen bietet den Vorteil, dass der Tragrahmen im Fahrzeug karosseriefest verankert werden kann und dass die Schwenkbewegung gegenüber dem Tragrahmen erfolgt, was insbesondere eine erhebliche konstruktive und Montagevereinfachung bedeutet.

Gemäß weiterer bevorzugter Ausführung ist die Schwenkbewegung mit der Rotationsbewegung der Wischerwelle kinematisch gekoppelt. Dies wird vorteilhafterweise dadurch erreicht, dass der Antriebsmotor zugleich den Aktuator bildet, der für die Erzeugung der Schwenkbewegung der Wischerwelle um die Schwenkachse verantwortlich ist. Zur konkreten Realisierung dieser kinematischen Kopplung von Schwenkbewegung und Rotationsbewegung über den Antriebsmotor ist beispielsweise ein rotierendes Bauteil der Scheibenwischvorrichtung, das primär zur Erzeugung der Rotationsbewegung des Wischerarms verantwortlich ist, mit einer Nockenkurve versehen, die mit einem Abtast- bzw. Stellelement zusammenwirkt, wobei das Stellelement die Wischerwelle als Funktion der Nockenkurve verschwenkt. Auf diese Weise wird aus der rotierenden Bewegung des Bauteils die auf die Wischerwelle wirkende Stellbewegung abgeleitet, die zur Schwenkbewegung der Wischerwelle führt. Die Gestaltung der Nockenkurve erlaubt hierbei mit einfachen konstruktiven Mitteln eine Anpassung an unterschiedliche Scheibenkrümmungen.

Als rotierendes Bauteil der Scheibenwischvorrichtung wird insbesondere ein Bauteil der Übertragungseinrichtung zwischen Antriebsmotor und Wischerwelle herangezogen, beispielsweise eine Kurbel, die eine die Nockenkurve bildende Oberflächengestaltung aufweist. Die Nockenkurve wird von dem Stellelement abgegriffen bzw. abgetastet, wobei das Stellelement beispielsweise als ein Rollenstößel ausgebildet ist, der über die Nockenkurve entlang gleitet bzw. unter dem die Nockenkurve entlang bewegt wird. Um sicherzustellen, dass das Abtastelement in allen Bewegungsphasen in Kontakt zur Nockenkurve liegt, ist die Wischerwelle oder ein sonstiges Bauteil der Scheibenwischvorrichtung, das die Schwenkbewegung mit ausführt, von einem Federelement in eine definierte Schwenklage kraftbeaufschlagt. Dieses Federelement drückt Nockenkurve und Abtastelement aneinander, so dass die Nockenkurvenoberfläche in permanentem Kontakt zum Abtast- bzw. Stellelement steht.

Alternativ zum Abgreifen der Stellbewegung von einer Nockenkurve ist es auch möglich, die Rotationsbewegung eines Bauteils der Scheibenwischvorrichtung über eine Exzenteranordnung oder dergleichen in eine Stellbewegung für die Erzeugung der Schwenkbewegung umzusetzen.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht einer Scheibenwischvorrichtung mit einem elektrischen Antriebsmotor, dessen Anker über eine Übertragungseinrichtung mit einer Wischerwelle bewegungsgekoppelt ist, an der ein Wischerarm gehalten ist, wobei Antriebsmotor, Übertragungseinrichtung und Wischerwelle einschließlich Wischerarm schwenkbar in einem Tragrahmen aufgenommen sind und die Schwenkbewegung von der Rotationsbewegung des Antriebsmotors abgeleitet wird,
- Fig. 2: eine Seitenansicht der Scheibenwischvorrichtung mit einer Darstellung der Wischerwelle in verschiedenen Schwenkpositionen,
- Fig. 3: die Scheibenwischvorrichtung aus einer anderen Perspektive.

In den Figuren sind gleiche Bauteile mit gleichen Bezugszeichen versehen.

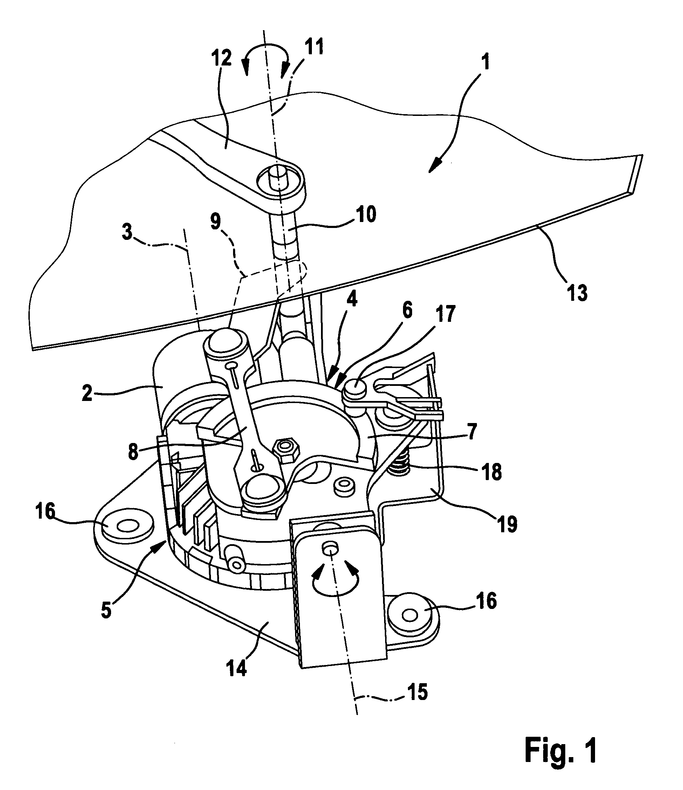

Die in Fig. 1 dargestellte Scheibenwischvorrichtung findet zweckmäßigerweise Einsatz in einem Kraftfahrzeug, beispielsweise als Frontscheibenwischvorrichtung. Die Scheibenwischvorrichtung 1 umfasst einen elektrischen Antriebsmotor 2, beispielsweise einen permanenterregten Gleichstrommotor, dessen Anker die Drehachse 3 aufweist und über eine Übertragungseinrichtung 4 mit einer Wischerwelle 10 drehgekoppelt ist, an der ein Wischerarm 12 befestigt ist. Bei einer reversierenden Antriebsbewegung des Antriebsmotors 2 wird somit eine reversierende Drehbewegung der Wischerwelle 10 um die Wischerwellen-Rotationsachse 11 erzeugt, woraufhin der Wischerarm 12 über die zu reinigende Scheibe 13 gleitet.

Die Übertragungseinrichtung 4 umfasst ein Getriebe 5, über das die Drehbewegung des Ankers des Antriebsmotors 2 auf eine Abtriebswelle übertragen wird, auf der drehfest eine Kurbel 6 angeordnet ist, welche einteilig mit einer teilkreisförmigen Nockenscheibe ausgeführt ist, wobei auf der Oberseite der Nockenscheibe eine Nockenkurve 7 entlang eines Teilkreises angeordnet ist. Exzentrisch zur Rotationsachse der Kurbel 6 ist an der Nockenscheibe ein Übertragungslenker 8 drehbar angekoppelt, der auf seiner der Kurbel 6 abgewandten Seite über ein weiteres Drehgelenk mit einem gekröpften Lenker 9 drehverbunden ist, welcher drehfest mit der Wischerwelle 10 verbunden ist. Die Drehbewegung der Kurbel 6 wird über die Lenker 8 und 9 in die Rotationsbewegung der Wischerwelle 10 und des Wischerarms 12 um die Rotationsachse 11 übertragen.

Des Weiteren ist der Scheibenwischvorrichtung ein Trag- bzw. Hilfsrahmen 14 zugeordnet, in welchem sämtliche Bauteile der Scheibenwischvorrichtung schwenkbar aufgenommen sind. Der Tragrahmen 14 wird über verschiedene Befestigungspunkte 16 fest mit der Fahrzeugkarosserie verbunden. In dem Tragrahmen 14 sind der Antriebsmotor 2, die Übertragungseinrichtung 4 und die Wischerwelle 10 einschließlich Wischerarm 12 schwenkbar gelagert aufgenommen; die Schwenkachse ist mit Bezugszeichen 15 gekennzeichnet. Hierbei bilden alle um die Schwenkachse 15 schwenkbar gelagerten Bauteile der Scheibenwischvorrichtung ein zusammengehörendes Modul, das insgesamt um die Schwenkachse 15 zu verschwenken ist. Über eine derartige Schwenkbewegung kann der Krümmung der Scheibe 13 Rechnung getragen werden, so dass der Wischarm 12 auch bei dem Erreichen der stärker gekrümmten Seitenbereiche der Scheibe 13 plan auf der Scheibe aufliegt.

Die Rotationsbewegung von Wischerwelle 10 und Wischerarm 12 um die Rotationsachse 11 ist mit der Schwenkbewegung des Moduls um die Schwenkachse 15 kinematisch zwangsgekoppelt, die Schwenkbewegung um die Schwenkachse 15 wird ebenfalls über den Antriebsmotor 2 erzeugt. Dies erfolgt dadurch, dass ein fest mit dem Tragrahmen 14 verbundenes, als Rollenstößel 17 ausgebildetes Stell- bzw. Abtastelement auf der Nockenkurve 7 aufliegt, die Bestandteil der rotierenden Kurbel 6 ist. Ein permanentes Anliegen des Rollenstößels 17 auf der Nockenkurve 7 wird dadurch gewährleistet, dass das schwenkbare Modul von einem Federelement 18, welches sich an einem Flansch 19 des Tragrahmens 14 abstützt, in der Weise kraftbeaufschlagt wird, dass die Nockenkurve 7 gegen den fix angeordneten, unbeweglich gehaltenen Rollenstößel 17 gedrückt wird. Bei einer Drehung der Kurbel 6 liegt somit der Rollenstößel 17 permanent an der Nockenkontur der Nockenkurve 7 an, wobei die Erhebungen und Vertiefungen in der Nockenkurve 7 aufgrund der Abstützung am Rollenstößel 17 einerseits und der Federkraftbeaufschlagung durch das Federelement 18 andererseits zu einer Schwenkbewegung um die Schwenkachse 15 führen.

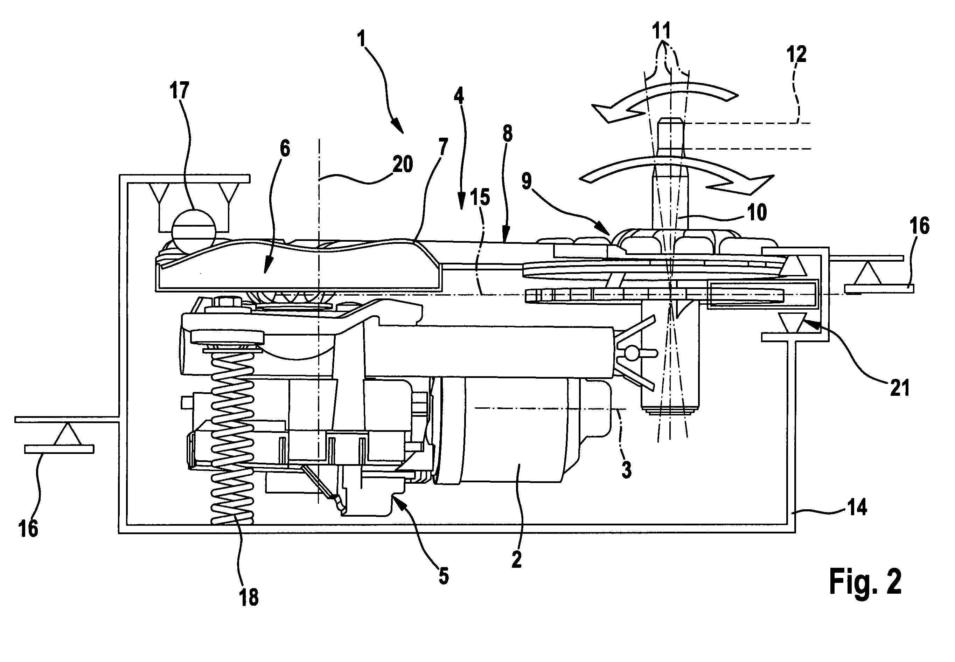

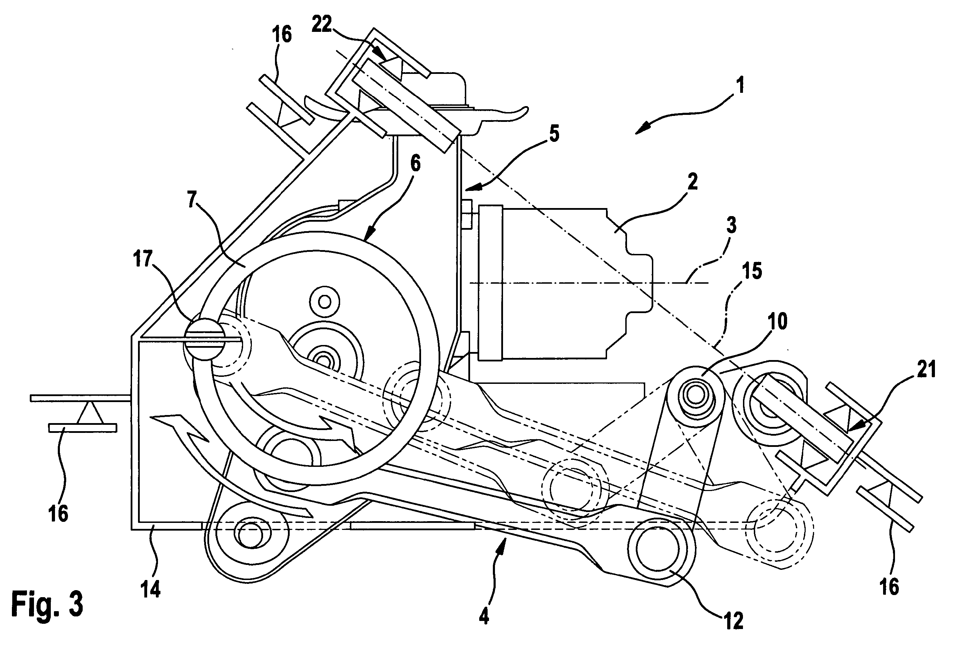

Wie der Darstellung nach Fig. 2 zu entnehmen, ist das Modul, bestehend aus Antriebsmotor 2, Übertragungseinrichtung 4 und Wischerwelle 10 einschließlich Wischerarm 12, im Tragrahmen 14 an einer Seite in einem Lager 21 schwenkbar gelagert, das zweite, gegenüberliegende Lager 22 ist aus Fig. 3 ersichtlich. Die Schwenkachse 15 verläuft senkrecht zur Rotationsachse 11 und liegt etwas unterhalb und parallel zum Übertragungslenker 8. Bei einer Schwenkbewegung um die Schwenkachse 15 wird die Wischerwelle 10 aus der Bildebene der Fig. 2 heraus bzw. in diese hinein verschwenkt. Aus Gründen der besseren Darstellbarkeit ist in Fig. 2 die Rotationsachse 11 der Wischerwelle 10 in die Bildebene hinein projiziert, derart, dass drei Rotationsachsen 11 beispielhaft eingetragen sind, die jeweils einer bestimmten Schwenkposition zugeordnet sind.

Wie Fig. 3 zu entnehmen, kann die Nockenkurve 7, welche auf der einteilig mit der Kurbel 6 ausgebildeten Nockenscheibe ausgebildet ist, in Form eines geschlossenen Kreises ausgeführt sein, an dem der Rollenstößel 17 anliegt. Die teilkreisförmige Gestaltung der Nockenkurve 7 aus Fig. 1 reicht aber grundsätzlich aus, da der Antriebsmotor eine reversierende Antriebsbewegung ausübt und dementsprechend der Winkelumfang der Nockenkurve auf die Reversionsbewegung des Ankers des Antriebsmotors angepasst werden kann.

## Patentansprüche

1. Scheibenwischvorrichtung, insbesondere in einem Kraftfahrzeug, mit einem Antriebsmotor (2), der über eine Übertragungseinrichtung (4) mit einer Wischerwelle (10) bewegungsgekoppelt ist, an der ein Wischerarm (12) gehalten ist, wobei die Wischerwelle (10) um eine Rotationsachse (11) rotierend gelagert ist,
**dadurch gekennzeichnet, dass** die Wischerwelle (10) um eine Schwenkachse (15) verschwenkbar gelagert ist, wobei die Schwenkachse (15) und die Rotationsachse (11) der Wischerwelle (10) zueinander in einem Winkel stehen, und dass die Wischerwelle (10) von einem Aktuator um die Schwenkachse (15) beaufschlagbar ist.

2. Scheibenwischvorrichtung nach Anspruch 1,
**dadurch gekennzeichnet, dass** die Schwenkachse (15) zumindest annähernd senkrecht zur Rotationsachse (11) steht.

3. Scheibenwischvorrichtung nach Anspruch 1 oder 2,
**dadurch gekennzeichnet, dass** der Antriebsmotor (2), die Übertragungseinrichtung (4) und die Wischerwelle (10) einschließlich Wischerarm (12) ein zusammenhängendes Modul bilden und gemeinsam um die Schwenkachse (15) verschwenkbar gelagert sind.

4. Scheibenwischvorrichtung nach einem der Ansprüche 1 bis 3,
**dadurch gekennzeichnet, dass** die Schwenkbewegung der Wischerwelle (10) um die Schwenkachse (15) mit der Rotationsbewegung um die Rotationsachse (11) kinematisch gekoppelt ist.

5. Scheibenwischvorrichtung nach einem der Ansprüche 1 bis 4,
**dadurch gekennzeichnet, dass** der Antriebsmotor (2) zugleich den Aktuator bildet zur Erzeugung der Schwenkbewegung der Wischerwelle (10) um die Schwenkachse (15).

6. Scheibenwischvorrichtung nach einem der Ansprüche 1 bis 5,
**dadurch gekennzeichnet, dass** ein rotierendes Bauteil der Scheibenwischvorrichtung (1) mit einer Nockenkurve (7) versehen ist, mit der ein Stellelement (17) zusammenwirkt, wobei das Stellelement (17) die Wischerwelle (10) als Funktion der Nockenkurve (7) verschwenkt.

7. Scheibenwischvorrichtung nach Anspruch 6,
**dadurch gekennzeichnet, dass** das rotierende Bauteil der Scheibenwischvorrichtung (1) eine Kurbel (6) ist, welche Bestandteil der Übertragungseinrichtung (4) ist.

8. Scheibenwischvorrichtung nach Anspruch 7,
**dadurch gekennzeichnet, dass** die Nockenkurve (7) als entsprechende Oberflächengestaltung der Kurbel (6) ausgebildet ist.

9. Scheibenwischvorrichtung nach einem der Ansprüche 6 bis 8,
**dadurch gekennzeichnet, dass** das Stellelement als Rollenstößel (17) ausgebildet ist, der die Nockenkurve (7) abtastet.

10. Scheibenwischvorrichtung nach einem der Ansprüche 1 bis 9,
**dadurch gekennzeichnet, dass** die Wischerwelle (10) von einem Federelement (18) in eine definierte Schwenklage kraftbeaufschlagt ist.

11. Scheibenwischvorrichtung nach einem der Ansprüche 6 bis 9 und nach Anspruch 10,
**dadurch gekennzeichnet, dass** das die Nockenkurve (7) aufweisende Bauteil direkt oder indirekt von dem Federelement (18) kraftbeaufschlagt ist.

12. Scheibenwischvorrichtung nach einem der Ansprüche 1 bis 11, **dadurch gekennzeichnet, dass** die Scheibenwischvorrichtung (1) einen Tragrahmen (14) umfasst.

13. Scheibenwischvorrichtung nach Anspruch 12,
**dadurch gekennzeichnet, dass** die Wischerwelle (10) in dem Tragrahmen (14) schwenkbar gelagert ist.

14. Scheibenwischvorrichtung nach Anspruch 3 und 12,
**dadurch gekennzeichnet, dass** das gesamte Modul in dem Tragrahmen (14) schwenkbar gelagert ist.

15. Scheibenwischvorrichtung nach einem der Ansprüche 12 bis 14,
**dadurch gekennzeichnet, dass** der Tragrahmen (14) fest an der Fahrzeugkarosserie gelagert ist.

16. Scheibenwischvorrichtung nach einem der Ansprüche 1 bis 15,
**dadurch gekennzeichnet, dass** die Übertragungseinrichtung (4) eine Abtriebswelle, die von dem Anker des Antriebsmotors (2) angetrieben ist, und ein Übertragungsgestänge zwischen der Abtriebswelle und der Wischerwelle (10) umfasst.

## Claims

1. Windscreen wiper device, in particular in a motor vehicle, with a driving motor (2) which is coupled in terms of movement via a transmission device (4) to a wiper shaft (10), on which a wiper arm (12) is held, wherein the wiper shaft (10) is mounted so as to rotate about an axis of rotation (11), **characterized in that** the wiper shaft (10) is mounted pivotably about a pivot axis (15), the pivot axis (15) and the axis of rotation (11) of the wiper shaft (10) being an at angle to each other, and **in that** the wiper shaft (10) is acted upon about the pivot axis (15) by an actuator.

2. Windscreen wiper device according to Claim 1, **characterized in that** the pivot axis (15) is at least approximately perpendicular to the axis of rotation (11).

3. Windscreen wiper device according to Claim 1 or 2, **characterized in that** the driving motor (2), the transmission device (4) and the wiper shaft (10) including the wiper arm (12) form a cohesive module and are mounted such that they can be pivoted together about the pivot axis (15).

4. Windscreen wiper device according to one of Claims 1 to 3, **characterized in that** the pivoting movement of the wiper shaft (10) about the pivot axis (15) is kinematically coupled to the rotational movement about the axis of rotation (11).

5. Windscreen wiper device according to one of Claims 1 to 4, **characterized in that** the driving motor (2) at the same time forms the actuator for producing the pivoting movement of the wiper shaft (10) about the pivot axis (15).

6. Windscreen wiper device according to one of Claims 1 to 5, **characterized in that** a rotating component of the windscreen wiper device (1) is provided with a cam curve (7) with which an adjusting element (17) interacts, the adjusting element (17) pivoting the wiper shaft (10) as a function of the cam curve (7).

7. Windscreen wiper device according to Claim 6, **characterized in that** the rotating component of the windscreen wiper device (1) is a crank (6) which is part of the transmission device (4).

8. Windscreen wiper device according to Claim 7, **characterized in that** the cam curve (7) is designed as a corresponding surface configuration of the crank (6).

9. Windscreen wiper device according to one of Claims 6 to 8, **characterized in that** the adjusting element is designed as a roller tappet (17) which follows the cam curve (7).

10. Windscreen wiper device according to one of Claims 1 to 9, **characterized in that** the wiper shaft (10) is force-actuated into a defined pivot position by a spring element (18).

11. Windscreen wiper device according to one of Claims 6 to 9 and according to Claim 10, **characterized in that** the component having the cam curve (7) is directly or indirectly force-actuated by the spring element (18).

12. Windscreen wiper device according to one of Claims 1 to 11, **characterized in that** the windscreen wiper device (1) comprises a supporting frame (14).

13. Windscreen wiper device according to Claim 12, **characterized in that** the wiper shaft (10) is mounted pivotably in the supporting frame (14).

14. Windscreen wiper device according to Claims 3 and 12, **characterized in that** the entire module is mounted pivotably in the supporting frame (14).

15. Windscreen wiper device according to one of Claims 12 to 14, **characterized in that** the supporting frame (14) is mounted fixedly on the vehicle body.

16. Windscreen wiper device according to one of Claims 1 to 15, **characterized in that** the transmission device (4) comprises an output shaft, which is driven by the armature of the driving motor (2), and a transmission linkage between the output shaft and the wiper shaft (10).

## Revendications

1. Dispositif d'essuie-glace, en particulier dans un véhicule automobile, comprenant un moteur d'entraînement (2), qui est accouplé en mouvement par le biais d'un dispositif de transfert (4) à un arbre d'essuie-glace (10), sur lequel est fixé un bras d'essuie-glace (12), l'arbre d'essuie-glace (10) étant monté à rotation autour d'un axe de rotation (11),
**caractérisé en ce que** l'arbre d'essuie-glace (10) est monté de manière à pouvoir pivoter autour d'un axe de pivotement (15), l'axe de pivotement (15) et l'axe de rotation (11) de l'arbre d'essuie-glace (10) étant orientés suivant un certain angle l'un par rapport à l'autre, et l'arbre d'essuie-glace (10) pouvant être sollicité par un actionneur autour de l'axe de pivotement (15).

2. Dispositif d'essuie-glace selon la revendication 1,
**caractérisé en ce que** l'axe de pivotement (15) est au moins approximativement perpendiculaire à l'axe de rotation (11).

3. Dispositif d'essuie-glace selon la revendication 1 ou 2,
**caractérisé en ce que** le moteur d'entraînement (2), le dispositif de transfert (4) et l'arbre d'essuie-glace (10) y compris le bras d'essuie-glace (12) forment un module continu et sont montés de manière à pouvoir pivoter ensemble autour de l'axe de pivotement (15).

4. Dispositif d'essuie-glace selon l'une quelconque des revendications 1 à 3, **caractérisé en ce que** le mouvement de pivotement de l'arbre d'essuie-glace (10) autour de l'axe de pivotement (15) est accouplé de manière cinématique au mouvement de rotation autour de l'axe de rotation (11).

5. Dispositif d'essuie-glace selon l'une quelconque des revendications 1 à 4,
**caractérisé en ce que** le moteur d'entraînement (2) forme en même temps l'actionneur pour générer le mouvement de pivotement de l'arbre d'essuie-glace (10) autour de l'axe de pivotement (15).

6. Dispositif d'essuie-glace selon l'une quelconque des revendications 1 à 5,
**caractérisé en ce qu'**un composant rotatif du dispositif d'essuie-glace (1) est pourvu d'un contour de came (7) avec lequel coopère un élément de commande (17), l'élément de commande (17) faisant pivoter l'arbre d'essuie-glace (10) en fonction du contour de came (7).

7. Dispositif d'essuie-glace selon la revendication 6,
**caractérisé en ce que** le composant rotatif du dispositif d'essuie-glace (1) est une manivelle (6), qui fait partie du dispositif de transfert (4).

8. Dispositif d'essuie-glace selon la revendication 7, **caractérisé en ce que** le contour de came (7) est réalisé sous forme de configuration de surface correspondante de la manivelle (6).

9. Dispositif d'essuie-glace selon l'une quelconque des revendications 6 à 8, **caractérisé en ce que** l'élément de commande est réalisé sous forme de poussoir de rouleau (17), qui balaye le contour de came (7).

10. Dispositif d'essuie-glace selon l'une quelconque des revendications 1 à 9, **caractérisé en ce que** l'arbre d'essuie-glace (10) est sollicité par force par un élément de ressort (18) dans une position de pivotement définie.

11. Dispositif d'essuie-glace selon l'une quelconque des revendications 6 à 9 et selon la revendication 10,
**caractérisé en ce que** le composant présentant le contour de came (7) est sollicité par force directement ou indirectement par l'élément de ressort (18).

12. Dispositif d'essuie-glace selon l'une quelconque des revendications 1 à 11,
**caractérisé en ce que** le dispositif d'essuie-glace (1) comprend un cadre de support (14).

13. Dispositif d'essuie-glace selon la revendication 12,
**caractérisé en ce que** l'arbre d'essuie-glace (10) est monté à pivotement dans le cadre de support (14).

14. Dispositif d'essuie-glace selon les revendications 3 et 12,
**caractérisé en ce que** le module dans son ensemble est monté à pivotement dans le cadre de support (14).

15. Dispositif d'essuie-glace selon l'une quelconque des revendications 12 à 14, **caractérisé en ce que** le cadre de support (14) est monté de manière fixe sur la carrosserie du véhicule.

16. Dispositif d'essuie-glace selon l'une quelconque des revendications 1 à 15, **caractérisé en ce que** le dispositif de transfert (4) comprend un arbre de sortie, qui est entraîné par l'induit du moteur d'entraînement (2), et une tringle de transfert entre l'arbre de sortie et l'arbre d'essuie-glace (10).
